# EUROPÄISCHE PATENTANMELDUNG

(11) **EP 4 751 572 A2**
(43) Veröffentlichungstag der Anmeldung: **03.06.2026**
(21) Anmeldenummer: 25219174.7
(22) Anmeldetag: 27.11.2025
(51) Int. Cl.: A22B 3/06, H05C 1/00

(54) **BETÄUBUNGSZANGE ZUM ELEKTRISCHEN BETÄUBEN VON SCHLACHTVIEH, ELEKTRODENKOPFANORDNUNG SOWIE ELEKTRODE HIERFÜR**

(30) Priorität: 02.12.2024 DE 202024106992 U
(71) Anmelder: Freund Maschinenfabrik GmbH & Co. KG, 33106 Paderborn (DE)
(72) Erfinder: Ewers, Christoph, 34439 Willebadessen (DE)
(74) Vertreter: Wickord, Wiro

(57) **Zusammenfassung**

Die Erfindung betrifft eine Elektrode (3) für eine Betäubungszange (100) zum elektrischen Betäuben von Schlachtvieh, wobei die Elektrode (3) bodenlos ausgeführt ist mit einer um eine Elektrodenöffnung (9) umlaufenden hohlzylindrischen Elektrodenwandung (6) und mit einer an einer ersten Stirnseite (25) vorgesehenen Verzahnung (10) mit einer Mehrzahl von zackenförmigen Vorsprüngen (11).

## Beschreibung

Die Erfindung betrifft eine Betäubungszange zum elektrischen Betäuben von Schlachtvieh sowie eine Elektrodenkopfanordnung und eine Elektrode hierfür.

Schlachtbetriebe sehen sich heute einem gesteigerten Preis- und Qualitätsbewusstsein der Konsumenten und einem dadurch resultierenden hohen Wettbewerbsdruck ausgesetzt. Daher haben sie ein nachhaltiges, wirtschaftliches Vorgehen und eine optimale Fleischqualität zu erfüllen. Zudem haben sie ethische Anforderungen des Tierschutzes einzuhalten, demzufolge dem Töten des Schlachtviehs zur Vermeidung von Schmerzen eine zuverlässige Betäubung vorauszugehen hat.

In modernen Schichtbetrieben findet daher ein elektrisches Betäuben des Schlachtviehs mittels elektrischen Stroms, die sogenannte Elektrobetäubung, breite Anwendung. Dabei ist es so, dass das Schlachtvieh, beispielsweise Schweine, Schafe und Rinder, in der Regel mit einer Betäubungszange gegriffen und durch Injektion eines elektrischen Stroms in deren Gehirn und/oder Herz betäubt werden. Die Betäubungszangen sehen hierfür an ihren Zangenarmen endseitige Elektrodenköpfe mit Elektroden vor. Die Elektroden weisen im Regelfall eine scharfkantige Verzahnung auf, um während des Betäubungsvorgangs die Haut, die einen hohen elektrischen Widerstand aufweist, des Schlachtviehs zu durchdringen und den elektrischen Strom in das Unterhautfettgewebe des Schlachtviehs zu injizieren.

Elektroden mit einer kreisförmig umlaufenden Gestalt und Verzahnung weisen eine vorteilhafte große Kontaktfläche auf. Bei den am Markt erhältlichen Betäubungszangen sind die hierfür vorgesehenen Elektroden jedoch meist aufwendig in der Fertigung und stellen insofern ein kostenintensives Verschleißteil dar.

In der DE 1952329 U ist eine Elektrodenkopfanordnung für eine Betäubungszange zum elektrischen Betäuben von Schlachtvieh offenbart. Diese weist eine Elektrode mit einem geschlossenen Boden und mit einer von dem Boden abragenden, kreisringförmig umlaufenden Verzahnung mit schrägverzahnten Vorsprüngen auf. Die Elektrode ist über eine Mutter lösbar mit einem Elektrodenkopf der Betäubungszange verbunden. Nachteilig ist hierbei, dass die Elektrode spanabhebend und damit mit einem hohen Materialeinsatz hergestellt ist.

Die DE 573842 A offenbart ebenfalls eine Elektrodenkopfanordnung für eine Betäubungszange zum elektrischen Betäuben von Schlachtvieh. Die Elektrode ist hier als ein ringförmiger Zahnkranz mit einem U-förmigen Querschnitt ausgeführt und liegt mit einem Bodenabschnitt auf einer elastischen Spannscheibe auf. Über insgesamt vier Schrauben ist die Elektrode mit dem Elektrodenkopf lösbar verbunden. Die Spannscheibe weist hier eine zentral angeordnete dornförmige Erhebung auf und ist mit einem in dem Elektrodenkopf aufgenommenen Federstift wirkverbunden derart, dass bei Druckausübung auf die dornförmige Erhebung der Spannscheibe ein elektrischer Kontakt für die Einleitung des Betäubungsstroms geschlossen ist. Die Spannscheibe ist hier insofern ein tasterartiges Bauteil einer elektrischen Kontaktierung.

Aufgabe der vorliegenden Erfindung ist es, für das elektrische Betäuben von Schlachtvieh eine neue alternative Betäubungszange sowie Elektrodenkopfanordnung und Elektrode hierfür anzugeben, um eine zuverlässige Betäubung und Handhabung sowie eine kostengünstige Herstellung zu ermöglichen.

Zur Lösung der Aufgabe weist die Erfindung die Merkmale des Patentanspruchs 1 auf. Demzufolge ist eine erfindungsgemäße Elektrode für eine Betäubungszange zum elektrischen Betäuben von Schlachtvieh bodenlos ausgeführt und weist eine um eine Elektrodenöffnung umlaufende hohlzylindrische Elektrodenwandung und eine an einer ersten Stirnseite vorgesehene Verzahnung mit einer Mehrzahl von zackenförmigen Vorsprüngen auf.

Der besondere Vorteil der Erfindung besteht darin, dass die Elektrode mit einer im Wesentlichen hohlzylindrischen Elektrodenwandung und damit bodenlos ausgeführt ist, sodass die Elektrode kostengünstig aus einem hohlzylindrischen Grundkörper, beispielsweise aus einem Rohr oder Rohrstück herstellbar ist und eine ringsum geschlossen-umlaufende Verzahnung ausbilden kann, sodass eine ausreichende Mehrzahl an Vorsprüngen ausgebildet ist. Dadurch ergibt sich für die Elektrode ein vergleichsweise hoher elektrischer Leitwert, der sich zum Betäuben des Schlachtviehs verwenden lässt. Des Weiteren ist die Ausrichtung beziehungsweise Handhabung einer die Elektrode aufweisenden Betäubungszange durch die umlaufende Verzahnung erleichtert. So stehen selbst dann ausreichend viele Vorsprünge zum Eindringen in die Haut des Schlachttiers und damit ein ausreichend hoher elektrischer Leitwert zur Elektrobetäubung desselben zur Verfügung, wenn die Elektrode in einem ungünstigen Neigungswinkel an die Hautoberfläche des Schlachttieres angesetzt ist. Dadurch ist eine zuverlässige und wirtschaftlich ausführbare Elektrobetäubung bei einer deutlichen Reduzierung von Schlachtschäden ermöglicht.

Nach einer bevorzugten Ausführungsform der Erfindung ist die Elektrode aus einem Rohr beziehungsweise Rohrstück und bevorzugt als ein Rohrlaserschneidbauteil hergestellt. Diese kostengünstige Herstellung ist durch die spezielle Geometrie beziehungsweise Form der Elektrode mit einer um eine Elektrodenöffnung geschlossen-umlaufenden Elektrodenwandung ermöglicht. Die Elektrode weist insofern eine hohlzylindrische Grundform auf, sodass sie aus einem Rohr beziehungsweise Rohrstück als Rohling beziehungsweise Halbzeug herstellbar ist. Die Verzahnung kann hierbei kostengünstig mittels einer Laserschneidoperation eingearbeitet sein. Gegenüber den am Markt erhältlichen spanabhebend oder als Blechbiegebauteil hergestellten Elektroden lassen sich diese (rohr-)lasergeschnittenen Elektroden insofern deutlich kostengünstiger sowie mit einer vorteilhafteren Geometrie, insbesondere im Bereich der Verzahnung, herstellen.

Nach einer bevorzugten Ausführungsform der Erfindung weist die Elektrode wenigstens zwei und bevorzugt insgesamt drei radial gleich verteilt angeordnete Ausklinkungen beziehungsweise Wandöffnungen auf. Die Ausklinkungen dienen der vereinfachten Montage der Elektrode an einem Elektrodenkopf, indem sie eine Aufnahme eines Fixierelements, beispielsweise einer Spannscheibe, ermöglichen. Durch die Vielzahl an radial gleich verteilt angeordneten Ausklinkungen ist dabei eine gleichmäßige Kraftverteilung ermöglicht.

Vorzugsweise weisen die Ausklinkungen eine Rechteckform auf und unterbrechen die Verzahnung. Die Ausklinkungen verlaufen entsprechend axial von der Elektrodenwandung in die Verzahnung einmündend. Durch diese zur Verzahnung hin offene Form der Ausklinkungen, ist ein Aufsetzen eines Spannelements zur Fixierung der Elektrode an einem Elektrodenkopf ermöglicht, wobei das Spannelement auf einer Talsohle der Ausklinkungen aufliegend, auf einer axialen Höhe unterhalb der Verzahnung positionierbar ist.

Gemäß einer alternativen Ausführungsform weist die Elektrode bevorzugt mindestens zwei und besonders bevorzugt drei radial verteilt angeordnete Wandöffnungen zur Durchführung von Schrauben auf, über die die Elektrode lösbar an einem Elektrodenkopf montierbar ist. Die Wandöffnungen sind bevorzugt als Durchgangsbohrungen oder als in eine der Verzahnung gegenüberliegenden zweiten Stirnseite der Elektrodenwandung mündende Ausbrüche ausgeführt.

Nach einer Weiterbildung der Erfindung weist die Elektrode an einer der Verzahnung gegenüberliegenden zweiten Stirnseite einen axial hervorstehenden Axialvorsprung auf. Der Axialvorsprung kann beispielsweise als eine Positionier- beziehungsweise Montagehilfe dienen und beispielsweise bei einer ordnungsgemäßen Montage der Elektrode an einem Elektrodenkopf in eine formkorrespondierende Ausnehmung im Elektrodenkopf eingreifen.

Nach einer Weiterbildung der Erfindung ragen die zackenförmigen Vorsprünge der Verzahnung der Elektrode in eine gemeinsame Anlageebene vor. Insofern ist beim Anlegen der Elektrode an die Hautoberfläche des zu betäubenden Schlachtviehs sichergestellt, dass möglichst viele Verzahnungen gleichzeitig durch die Haut in das Unterhautfettgewebe des Schlachtviehs eindringen können und dass infolgedessen ein ausreichend hoher elektrischer Leitwert für die Elektrobetäubung des Schlachtviehs zur Verfügung steht. Der positive Effekt sind eine bessere Betäubungswirkung sowie eine Reduzierung von Schlachtschäden beziehungsweise eine verbesserte Fleischqualität.

Nach einer Weiterbildung der Erfindung ist zwischen benachbarten Vorsprüngen der Verzahnung der Elektrode jeweils eine parabelförmige Vertiefung ausgebildet. Diese vorteilhafte Geometrie ist mittels Laserschneidens herstellbar und hat den positiven Effekt, dass sich Verschmutzungen, beispielsweise Haut- oder Fleischreste, weniger stark im Bereich der Vertiefungen beziehungsweise der Zahnlücken der Verzahnung ansammeln. Außerdem ermöglicht die parabelförmige, runde Form für die Vertiefungen der Verzahnung eine reduzierte Spannungsbelastung und damit eine erhöhte mechanische Stabilität und Verschleißfestigkeit gegenüber einer Verzahnung mit eckigen Vertiefungen.

Nach einer Weiterbildung der Erfindung weisen die Vorsprünge jeweils einen Keilwinkel im Bereich von 15° bis 30° und bevorzugt im Bereich von 20° bis 25° auf. Die Vorsprünge der Verzahnung laufen insofern besonders spitz zu und sind somit besonders scharfkantig ausführbar, was ein verbessertes Durchdringen der Haut des Schlachtviehs ermöglicht. Bevorzugt sind zwischen den Ausklinkungen jeweils insgesamt sieben Vorsprünge für die Verzahnung vorgesehen.

Nach einer bevorzugten Ausführungsform der Erfindung weist die Elektrode einen bevorzugten Durchmesser von 70 mm, eine bevorzugte Blechstärke von 2 mm bis 4 mm und besonders bevorzugt 3 mm und eine bevorzugte Höhe von 32 mm auf.

Zur Lösung der Aufgabe weist die Erfindung die Merkmale des Patentanspruchs 4 auf. Demzufolge umfasst eine erfindungsgemäße Elektrodenkopfanordnung für eine Betäubungszange zum elektrischen Betäuben von Schlachtvieh eine an einem Elektrodenkopf der Betäubungszange lösbar gehaltene erfindungsgemäße Elektrode, welche bodenlos ausgeführt ist mit einer um eine Elektrodenöffnung umlaufenden hohlzylindrischen Elektrodenwandung und mit einer an einer dem Elektrodenkopf entgegengesetzten ersten Stirnseite vorgesehenen Verzahnung mit einer Mehrzahl von zackenförmigen Vorsprüngen.

Der besondere Vorteil der Erfindung besteht darin, dass die Elektrode ohne einen Boden an dem Elektrodenkopf festlegbar ist, sodass diese kostengünstig aus einem hohlzylindrischen Grundkörper herstellbar ist und eine im Wesentlichen umlaufende Verzahnung ausbildet, sodass eine ausreichende Mehrzahl an Vorsprüngen ausgebildet ist. Die Elektrode ist dabei positionsgesichert an dem Elektrodenkopf festgelegt, wodurch die Gefahr eines Verhakens in dem Schlachtvieh und hierdurch hervorgerufene Schlachtschäden reduziert sind.

Nach einer bevorzugten Ausführungsform der Erfindung ist in die Elektrodenöffnung der Elektrode eine Spannscheibe mit zu den Ausklinkungen formkorrespondierenden Radialvorsprüngen aufgenommen, wobei die Spannscheibe eine achsenmittige Zentralöffnung aufweist, durch die ein Gewindestift des Elektrodenkopfs hindurchgeführt ist und wobei die Spannscheibe über eine auf den Gewindestift aufgeschraubte Mutter an dem Elektrodenkopf axial festgehalten ist. Die Spannscheibe dient hierbei als ein Deckel zum Verschluss des Elektrodenkopfs beziehungsweise zum bodenseitigen Verschluss der Elektrodenöffnung.

Nach einer Weiterbildung der Erfindung weist die Elektrode im Bereich der Elektrodenwandung wenigstens zwei die Verzahnung unterbrechende Ausklinkungen auf, wobei in die Elektrodenöffnung eine Spannscheibe mit zu den Ausklinkungen formkorrespondierenden Radialvorsprüngen derart aufgenommen ist, dass die Radialvorsprünge der Spannscheibe radial in die Ausklinkungen der Elektrode eingreifen und im Bereich der Ausklinkungen axial an der Elektrode anliegen. Die Spannscheibe dient damit der lösbaren, axialen Sicherung der Elektrode.

Nach einer Weiterbildung der Erfindung ist die Spannscheibe axial federnd ausgeführt und axial vorgespannt derart, dass die Spannscheibe die Elektrode mit einer zum Elektrodenkopf gerichteten axialen Federkraft einspannt. Dies ermöglicht eine besonders vorteilhafte axiale Sicherung der Elektrode an einem Elektrodenkopf.

Vorzugsweise ist hierfür die Spannscheibe aus Federblechstahl und bevorzugt mittels Laserschneidens beziehungsweise als ein Laserschneidbauteil hergestellt. Vorteilhaft ist die Spannscheibe damit kostengünstig in einem einzigen Arbeitsgang herstellbar.

Die Mutter ist vorzugsweise als Hutmutter ausgeführt. Gemäß einer bevorzugten Ausführungsform weist die Mutter dabei eine dornförmige beziehungsweise kegelförmige Spitze auf. Gemäß einer besonders bevorzugten Ausführungsform ist die Spitze der Mutter gegenüber den Vorsprüngen der Verzahnung axial erhaben ausgeführt. Insbesondere ist die Spitze der Mutter um etwa 10 mm ± 5 mm gegenüber den Vorsprüngen der Verzahnung erhaben ausgeführt.

Nach einer Weiterbildung der Erfindung ist axial zwischen dem Elektrodenkopf und der Spannscheibe und radial zwischen dem Elektrodenkopf und der Elektrodenwandung der Elektrode ein gummielastischer Dichtring angeordnet. Der Dichtring ist bevorzugt über die vorgespannte Spannscheibe ebenfalls elastisch vorgespannt, wodurch er eine gute Dichtwirkung aufweist. Der Dichtring dichtet dabei den Raum zwischen der Elektrodenwandung, der Spannscheibe und dem Elektrodenkopf ab und verhindert insofern, dass Verschmutzungen, beispielsweise Blut, Haut- und Fellstücke beziehungsweise Fellhaare, ins Innere des Elektrodenkopfes eindringen.

Nach einer Weiterbildung der Erfindung ist axial zwischen der Mutter und der Spannscheibe ein Metalldichtring vorgesehen. Der Metalldichtring ist bei angezogener Mutter vorgespannt. Vorzugsweise weist der Metalldichtring ein innenliegendes ringförmiges, gummielastisches Dichtelement auf, sodass der radiale Raum zwischen dem Gewindestift und der Spannscheibe abgedichtet und ein Eindringen von Verschmutzungen, beispielsweise Blut, Haut- und Fellstücke beziehungsweise Fellhaare, ins Innere des Elektrodenkopfes verhindert ist.

Nach einer bevorzugten Ausführungsform der Erfindung weist die Spannscheibe eine zu der Anzahl an Ausklinkungen der Elektrode korrespondierende Anzahl an radial gleich verteilt angeordneten Radialvorsprüngen auf. Insofern korrespondiert zusätzlich zur Form auch die Anzahl an Ausklinkungen in der Elektrodenwandung mit der Anzahl an außenrandseitig radial vorstehenden Radialvorsprüngen der Spannscheibe. Die Anzahl an Ausklinkungen und Radialvorsprüngen ist dabei so gewählt, dass eine gleichmäßige Verteilung der von der Mutter erzeugten und auf die Spannscheibe einwirkenden axialen Federkraft auf die Elektrode einwirkt. Die Ausklinkungen weisen vorzugsweise eine Rechteckform auf. Die Radialvorsprünge weisen demzufolge vorzugsweise eine formkorrespondierende Rechteckform auf. Gemäß einer besonders bevorzugten Ausführungsform sind insgesamt jeweils drei Ausklinkungen für die Elektrode und drei Radialvorsprünge für die Spannscheibe vorgesehen.

Nach einer Weiterbildung der Erfindung weist der Elektrodenkopf einen zylindrischen Stufenvorsprung auf, welcher in die Elektrodenöffnung der Elektrode hineinragt. Der Elektrodenkopf bildet insofern eine Stufe ähnlich einem Wellenabsatz aus und stellt damit einerseits eine axiale Anlagefläche beziehungsweise Anlageebene für die Elektrode bereit. Zudem sichert er eine radiale Positionierung der Elektrode, indem die Elektrode auf den Stufenvorsprung aufgesetzt ist und diesen mit der Elektrodenwandung umschließt.

Nach einer Weiterbildung der Erfindung weist der Elektrodenkopf eine randseitige Kopfvertiefung auf und die Elektrode weist an einer der Verzahnung gegenüberliegenden zweiten Stirnseite einen in die Kopfvertiefung eingreifenden Axialvorsprung auf. Hierüber ist eine radiale Ausrichtung der Elektrode gegenüber dem Elektrodenkopf gesichert, Fehlstellungen der Elektrode aufgrund einer fehlerhaften Montage sind damit verhindert. Der Axialvorsprung der Elektrode beträgt vorzugsweise zirka 5 mm ± 0,2 mm.

Zur Lösung der Aufgabe weist die Erfindung die Merkmale des nebengeordneten Patentanspruchs 10 auf. Demzufolge umfasst eine Betäubungszange zum elektrischen Betäuben von Schlachtvieh zwei einander überkreuzend über ein Drehgelenk gegenseitig verdrehbar verbundene Zangenarme, wobei die Zangenarme auf einer einem Bediener zugewandten Griffseite jeweils einen Griffschenkel und auf einer der Griffseite entgegengesetzten Seite jeweils einen Elektrodenschenkel aufweisen, wobei an den der Griffseite entgegengesetzten Enden der Elektrodenschenkel jeweils eine Elektrodenkopfanordnung mit einer erfindungsgemäßen Elektrode vorgesehen ist.

Der besondere Vorteil dieser erfindungsgemäßen Betäubungszange besteht darin, dass diese eine gute Betäubungswirkung aufweist, kostengünstig herstellbar ist und eine zuverlässige, vereinfachte Handhabung ermöglicht.

Die für die erfindungsgemäße Betäubungszange vorgesehenen Elektrodenkopfanordnungen können unter Beibehaltung der Erfindung von den erfindungsgemäßen Elektrodenkopfanordnungen abweichen.

Nach einer bevorzugten Ausführungsform der erfindungsgemäßen Betäubungszange sind die beiden Elektrodenkopfanordnungen als erfindungsgemäße Elektrodenkopfanordnungen ausgeführt.

Nach einer bevorzugten Ausführungsform weist eine Betäubungszange zum elektrischen Betäuben von Schlachtvieh zwei einander überkreuzend über ein Drehgelenk gegenseitig verdrehbar verbundene Zangenarme auf, wobei die Zangenarme auf einer einem Bediener zugewandten Griffseite jeweils einen Griffschenkel und auf einer der Griffseite entgegengesetzten Seite jeweils einen Elektrodenschenkel mit einem Elektrodenkopf auf die Griffschenkel und die Elektrodenschenkel jeweils als ein geradliniges Rohrstück hergestellt sind und wobei jeweils der Griffschenkel und der Elektrodenschenkel eines Zangenarms über ein Rahmenstück miteinander verbunden sind und wobei die Rahmenstücke an einander zugewandten Innenseiten jeweils eine Gelenköffnung aufweisen, in welcher das Drehgelenk aufgenommen ist. Diese zumindest abschnittsweise Aufnahme des Drehgelenks in die Rahmenstücke ermöglicht eine besonders flache, kompakte Bauweise. Durch die vorgesehenen Rahmenstücke können die Elektroden- und die Griffschenkel als mechanisch stabile und kostengünstig herstellbare gerade Rohre beziehungsweise Rohrstücke hergestellt sein. Die Zangenarme sind damit zwar jeweils zumindest dreiteilig hergestellt, aufweisend einen Elektronenschenkel, einen Griffschenkel und ein diese verbindendes Rahmenstück, dafür weisen sie gegenüber den bekannten, aus gebogenen Rohren hergestellten Zangenarmen eine deutlich erhöhte mechanische Stabilität auf und lassen sich gleichwohl kostengünstiger fertigen.

Vorzugsweise weisen die Rahmenstücke eine parallelogrammförmige Grundform auf, mit einander parallel gegenüberliegenden Längsseiten und mit einander parallel gegenüberliegenden und gegenüber den Längsseiten verkürzt ausgebildeten Stirnseiten.

Vorzugsweise sind die Elektrodenschenkel und die Griffschenkel jeweils an den Stirnseiten der Rahmenstücke festgelegt und bevorzugt parallel zu den Stirnseiten der Rahmenstücke orientiert. Besonders bevorzugt sind die Elektrodenschenkel und die Griffschenkel jeweils an den Stirnseiten der Rahmenstücke angeschweißt. Schweißnähte beziehungsweise Verbindungsstellen stellen regelmäßig einen mechanischen Konstruktionsschwachpunkt dar. Durch die vorgeschlagene Konstruktion liegen diese außerhalb des Drehpunktes des Drehgelenks, wodurch die mechanische Stabilität erhöht ist.

Vorzugsweise sind die Rahmenstücke als Vierkantprofilkörper und bevorzugt als Vierkantprofilhohlkörper ausgeführt. Hierdurch kann die Betäubungszange besonders leicht und flach beziehungsweise kompakt ausgeführt sein.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der Elektrodenkopfanordnung gelten selbstverständlich auch im Zusammenhang mit der Betäubungszange und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter. Gleiche Bauteile und Bauteilfunktionen sind durch gleiche Bezugszeichen gekennzeichnet. Es zeigen:
- Fig. 1: eine Explosionsansicht einer erfindungsgemäßen Elektrodenkopfanordnung in einem ersten Ausführungsbeispiel,
- Fig. 2: die erfindungsgemäße Elektrodenkopfanordnung nach Figur 1 in einer perspektivischen Ansicht,
- Fig. 3: die Elektrodenkopfanordnung nach Figur 1 in einer Schnittansicht,
- Fig. 4: eine Explosionsansicht einer erfindungsgemäßen Elektrodenkopfanordnung in einem zweiten Ausführungsbeispiel,
- Fig. 5: die erfindungsgemäße Elektrodenkopfanordnung nach Figur 4 in einer perspektivischen Ansicht,
- Fig. 6: die erfindungsgemäße Elektrodenkopfanordnung nach Figur 4 in einer Schnittansicht,
- Fig. 7: eine erfindungsgemäße Elektrode in einer perspektivischen Einzelansicht,
- Fig. 8: die erfindungsgemäße Elektrode nach Figur 7 in einer Seitenansicht,
- Fig. 9: die erfindungsgemäße Elektrode nach Figur 7 in einer Unteransicht,
- Fig. 10: eine Spannscheibe für eine erfindungsgemäße Elektrodenkopfanordnung in einer perspektivischen Einzelansicht,
- Fig. 11: ein erstes Ausführungsbeispiel einer erfindungsgemäßen Betäubungszange in einer Seitenansicht,
- Fig. 12: die erfindungsgemäße Betäubungszange nach Figur 11 in einer Draufsicht und
- Fig. 13: ein zweites Rahmenstück der erfindungsgemäßen Betäubungszange nach Figur 11 in einer perspektivischen Einzelansicht.

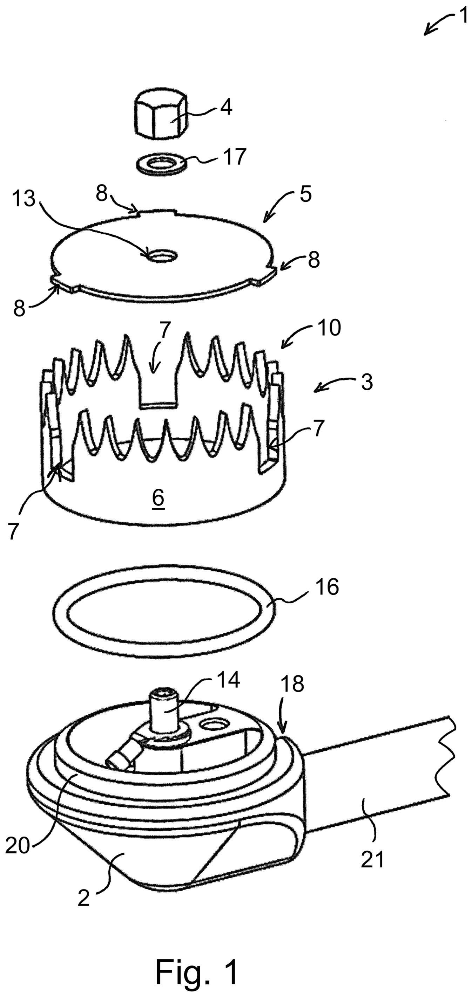

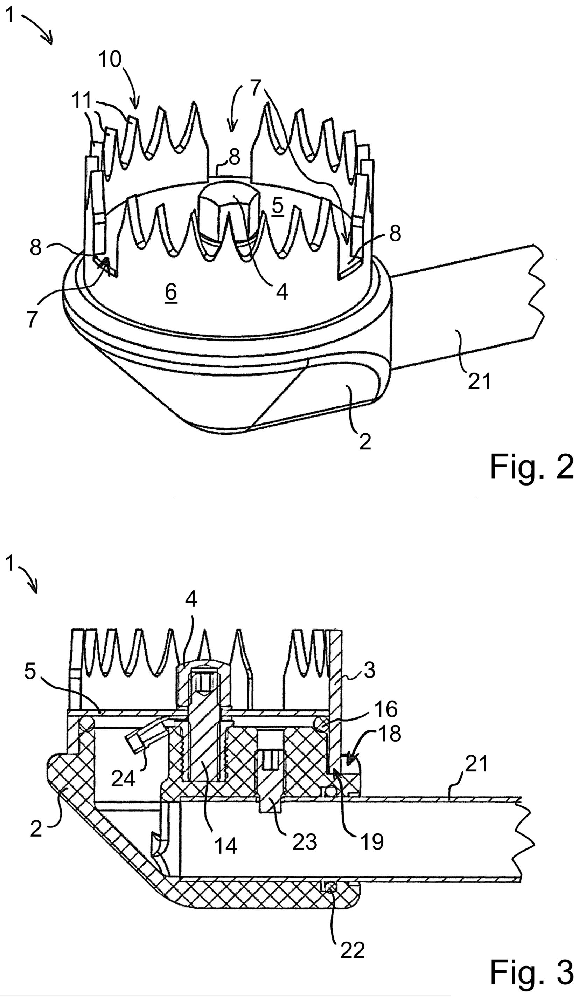

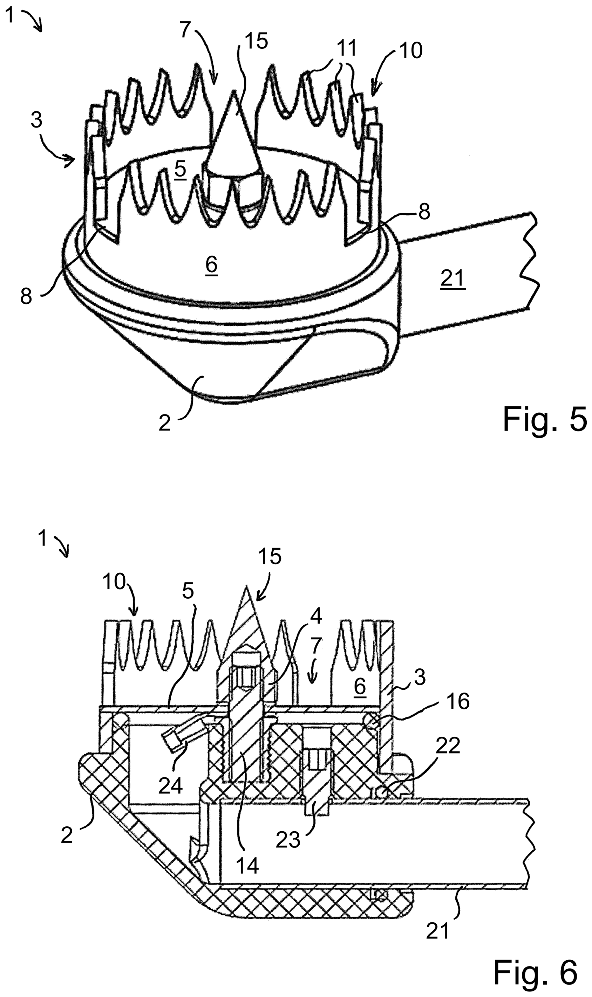

Die Figuren 1 bis 10 geben zwei Ausführungsbeispiele einer erfindungsgemäßen Elektrodenkopfanordnung 1 für eine Betäubungszange 100 zum elektrischen Betäuben von Schlachtvieh mit elektrischem Strom an. Diese Ausführungsbeispiele weisen jeweils eine erfindungsgemäße Elektrode 3 auf.

Die Elektrodenkopfanordnung 1 umfasst in beiden figürlichen Ausführungsbeispielen jeweils einen Elektrodenkopf 2, welcher an einem Ende eines Elektrodenschenkels 21 einer Betäubungszange 100 vorgesehen ist, eine kronenförmige beziehungsweise im Querschnitt kreisringförmige erfindungsgemäße bodenlose Elektrode 3, eine Spannscheibe 5 sowie eine Mutter 4. Zusätzlich ist beiden Ausführungsbeispielen gemein, dass jeweils zwischen der Mutter 4 und der Spannscheibe 5 ein Metalldichtring 17 und zwischen dem Elektrodenkopf 2 und der Elektrode 3 ein gummielastischer Dichtring 16 vorgesehen sind, die zur Abdichtung des Elektrodenkopfs 2 gegenüber Schmutz, beispielsweise Blut, Fell, Haaren, Haut- oder Fettstücken des zu betäubenden Schlachtviehs, vorgesehen sind.

Ein erstes Ausführungsbeispiel einer Elektrodenkopfanordnung 1 ist in den Fig. 1 bis Fig. 3 angegeben. Der Elektrodenkopf 2 ist hier als ein Gehäuse ausgeführt, welches eine zylindrische Ausnehmung zur Aufnahme des hier rohrförmigen Elektrodenschenkels 21 einer Betäubungszange 100 aufweist. Zum Festhalten des Elektrodenschenkels 21 ist in dem Elektrodenkopf 2 ein Gewindestift 23 vorgesehen, welcher in eine formkorrespondierende Öffnung des Elektrodenschenkels 21 eingreift. Zur radialen Abdichtung zwischen dem Elektrodenschenkel 21 und dem Elektrodenkopf 2 ist ein gummielastischer Dichtring 22 vorgesehen, welcher in einer im Querschnitt rechteckförmigen Ringausnehmung im Elektrodenkopf 2 angeordnet ist.

Der für die elektrische Betäubung (Elektrobetäubung) erforderliche elektrische Strom wird über eine figürlich nicht dargestellte elektrische Leitung beziehungsweise ein Stromkabel 160 in den Elektrodenkopf 2 geleitet, die elektrische Leitung beziehungsweise das Stromkabel 160 ist hierfür in dem rohrförmigen Elektrodenschenkel 21 und in dem hohlkörperförmigen Elektrodenkopf 2 geführt. Zur Kontaktierung des Stromkabels 160 beziehungsweise der elektrischen Leitung weist der Elektrodenkopf 2 einen Kabelschuh 24 auf, welcher elektrisch leitend mit der Elektrode 3 verbunden ist.

Der Elektrodenkopf 2 weist einen kreisringförmigen Stufenvorsprung 20 auf, welcher in eine Elektrodenöffnung 9 der Elektrode 3 hineinragt und die Elektrode 3 insofern in Position hält. Die Elektrodenwandung 6 der Elektrode 3 umschließt insofern den Stufenvorsprung 20 des Elektrodenkopfs 2.

Der Elektrodenkopf 2 weist des Weiteren einen Gewindestift 14 auf, welcher mittels eines Gewindes in einer Gewindeausnehmung des Elektrodenkopfs 2 gehalten ist. Der Gewindestift 14 ragt von dem Elektrodenkopf 2 ab und dient zur Aufnahme der Mutter 4. Die Mutter 4 ist hier als eine Hutmutter ausgeführt und für die axiale Festlegung sowie Erzeugung einer axialen Vorspannung der Spannscheibe 5 vorgesehen. Axial zwischen der Spannscheibe 5 und der Mutter 4 ist der Metalldichtring 17 angeordnet. Die Spannscheibe 5 weist eine zentral angeordnete Zentralöffnung 13 auf, die hier als eine kreisförmige Durchgangsbohrung ausgeführt ist. Die Zentralöffnung 13 ist bei der Elektrodenkopfanordnung 1 von dem Gewindestift 14 durchstoßen.

Die Spannscheibe 5 ist aus einem federnden beziehungsweise elastischen Material, bevorzugt Federstahlblech, hergestellt, sodass diese eine axiale Federkraft auf die Elektrode 3 ausübt. Über diese Verspannung der Spannscheibe 5 wird insofern die Elektrode 3 an den Elektrodenkopf 2 gedrückt. Die kronenförmige beziehungsweise im Querschnitt kreisringförmige, bodenlose Elektrode 3 weist hierfür insgesamt drei radial gleich verteilt angeordnete Ausklinkungen 7 auf, in die drei ebenfalls radial gleich verteilt angeordnete Radialvorsprünge der Spannscheibe 5 eingreifen. Die Ausklinkungen 7 der Elektrode 3 sind rechteckförmig ausgeführt, die Radialvorsprünge 8 der Spannscheibe 5 sind formkorrespondierend ebenfalls rechteckförmig ausgeführt und ragen radial von der Spannscheibe 5 ab. Gemäß der Elektrodenkopfanordnung 1 ist die Spannscheibe 5 derart über die Mutter 4 vorgespannt, dass diese im Bereich der Radialvorsprünge 8 an Bodenabschnitten der Ausklinkungen 7 der Elektrode 3 anliegt. Die Ausklinkungen 7 der Elektrode 3 verlaufen von der Verzahnung 10 aus in die Elektrodenwandung 6 der Elektrode 3 hinein.

Die Verzahnung 10 der Elektrode 3 sieht eine Mehrzahl an zackenförmigen, scharfkantig ausgeführten Vorsprüngen 11 vor, wobei zwischen zwei Ausklinkungen 7 der Elektrode 3 jeweils insgesamt sieben Vorsprünge 11 vorgesehen sind. Dabei ist zwischen zwei benachbarten Vorsprüngen 11 jeweils eine im Wesentlichen parabelförmige, gekrümmte Vertiefung 12 vorgesehen. Die Vorsprünge 11 der Verzahnung 10 sind jeweils derart spitz ausgeführt, dass ein Keilwinkel α maximal 30 ° und in den figürlichen Ausführungsbeispielen zirka 22 ° beträgt. Die Vorsprünge 11 der Verzahnung 10 sind in einer gemeinsamen Anlageebene, respektive auf gleicher Höhe, angeordnet. Hierdurch ist sichergestellt, dass die Elektrode 3 auch bei einer Schrägstellung mit einer ausreichenden Anzahl an Vorsprüngen 11 in das zu betäubende Schlachtvieh eingreift und einen ausreichend hohen Betäubungsstrom injiziert. Die Verzahnung 10 ist an einer ersten Stirnseite 25 der Elektrode 3 vorgesehen.

Eine hierzu entgegengesetzte zweite Stirnseite 26 der Elektrode 3 liegt auf dem Stufenvorsprung 20 des Elektrodenkopfs 2 auf, wobei zur radialen Positionierung die Elektrode 3 einen axial erhabenen Axialvorsprung 19 aufweist, welcher in eine korrespondierende Kopfvertiefung 18 im Elektrodenkopf eingreift. Hierüber ist die Elektrode 3 insofern nur in einer einzigen zulässigen Position an dem Elektrodenkopf 2 montierbar, wodurch die Montage vereinfacht ist und Fehlstellungen der Elektrode 3 verhindert sind.

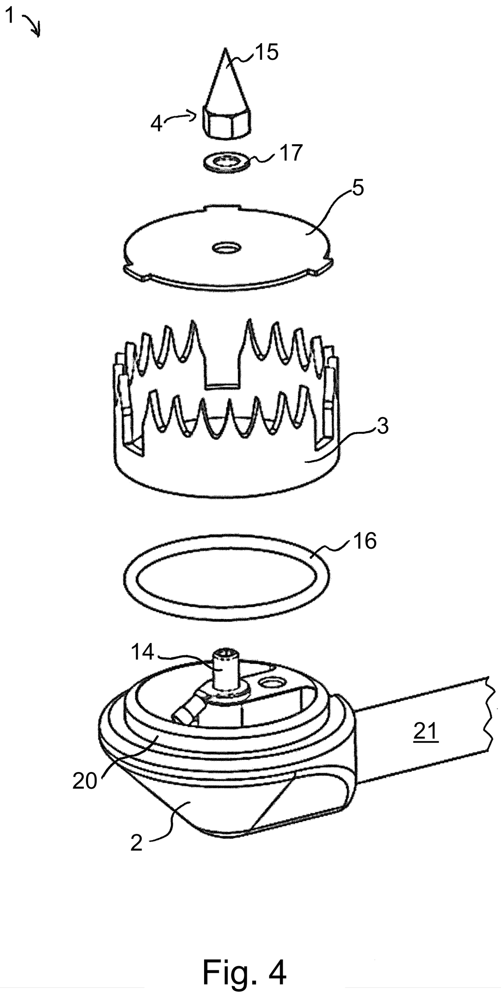

Das in den Figuren 4 bis 6 angegebene zweite Ausführungsbeispiel einer erfindungsgemäßen Elektrodenkopfanordnung 1 weicht lediglich in der Ausführung der Mutter 4 von dem Ausführungsbeispiel nach Figur 1 ab. In dem Ausführungsbeispiel nach Figur 4 ist die Mutter 4 ebenfalls als eine Hutmutter ausgeführt, weist jedoch eine kegelförmige beziehungsweise dornförmige Spitze 15 auf, die axial gegenüber der Verzahnung 10 der Elektrode 3 erhaben ist. Die Mutter 4 ist hier bevorzugt ebenfalls elektrisch kontaktiert mit der elektrischen Leitung beziehungsweise dem Stromkabel 160, sodass hierüber zusätzlich zu der Elektrode 3 der elektrische Betäubungsstrom in das Schlachtvieh injizierbar ist.

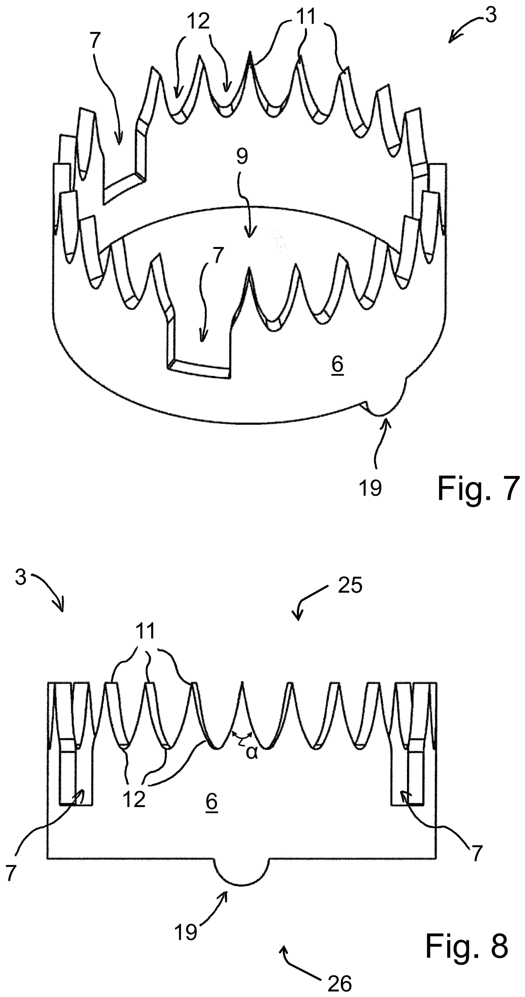

Einzelansichten der für die Elektrodenkopfanordnungen 1 nach Fig. 1 und Fig. 4 verwendeten Elektrode 3 sind in den Figuren 7 bis 9 angegeben.

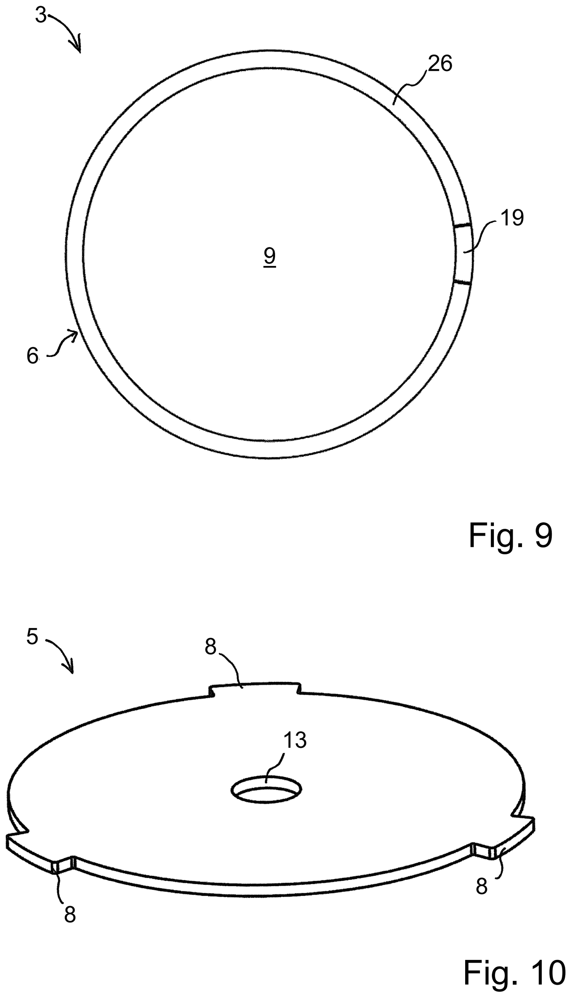

Eine Einzelansicht der in den Elektrodenkopfanordnungen nach Fig. 1 und Fig. 4 verwendeten Spannscheibe 5 ist in der Fig. 10 angegeben.

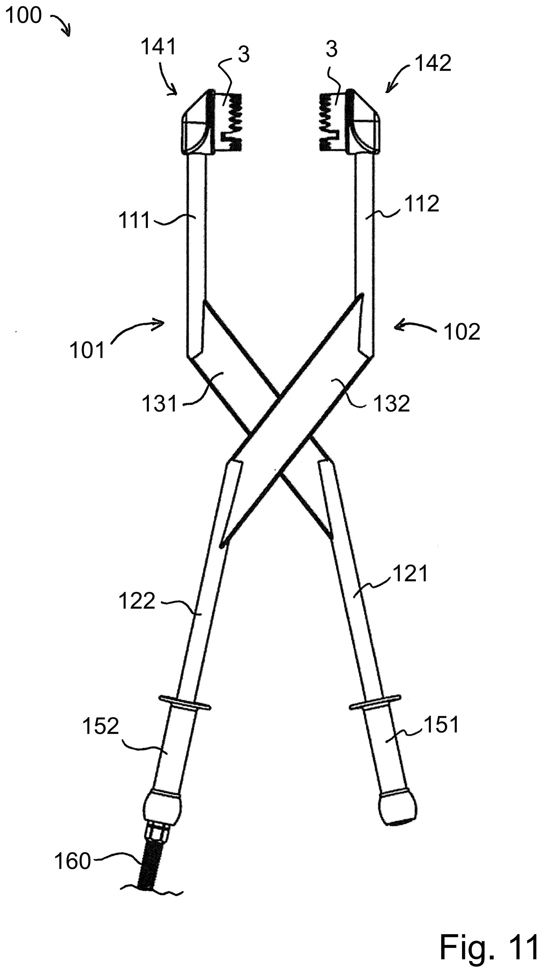

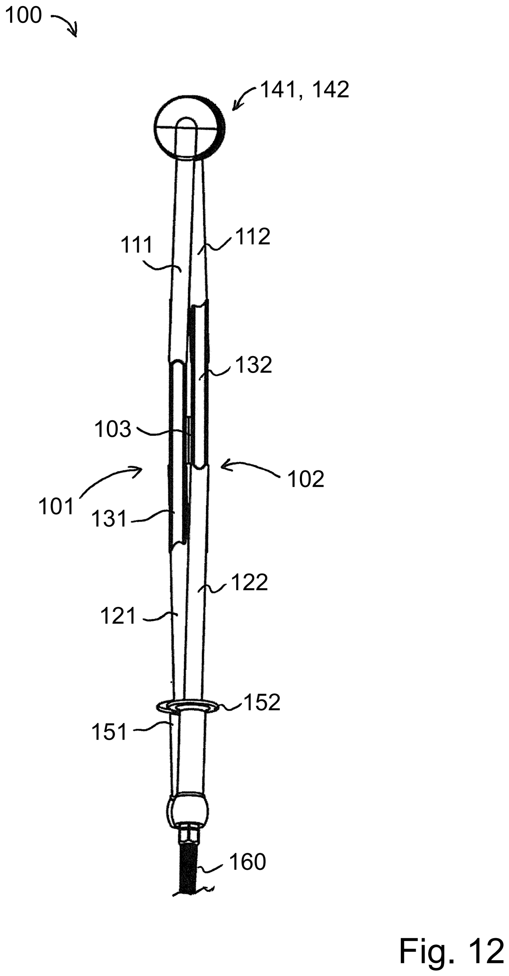

Ein Ausführungsbeispiel einer erfindungsgemäßen Betäubungszange 100 ist in den Fig. 11 bis Fig. 13 angegeben. Die Betäubungszange 100 weist zwei Zangenarme 101, 102 auf, die über ein Drehgelenk 103 überkreuzend beziehungsweise entgegengesetzt zueinander verdrehbar gelagert sind. Die Zangenarme 101, 102 sind jeweils im Wesentlichen dreiteilig ausgeführt, umfassend einen Elektrodenschenkel 111, 112, ein Rahmenstück 131, 132 und einen Griffschenkel 121, 122. Die Elektrodenschenkel 111, 112 und Griffschenkel 121, 122 sind jeweils als geradlinige Rohre beziehungsweise Rohrstücke ausgeführt und über die Rahmenstücke 131, 132 miteinander verbunden. Das Drehgelenk 103 ist dabei zwischen den Rahmenstücken 131, 132 positioniert, wobei die Rahmenstücke 131, 132 an einander zugewandten Innenseiten jeweils eine Gelenköffnung 162 aufweisen, in die das Drehgelenk 103 abschnittsweise aufgenommen ist. Vorteilhaft ist hierdurch ein besonders flacher beziehungsweise kompakter Aufbau für die Betäubungszange 100 ermöglicht.

An den freien Enden der Elektrodenschenkel 111, 112 ist hier jeweils eine erfindungsgemäße Elektrodenkopfanordnung 141, 142 vorgesehen, wie sie in dem Ausführungsbeispiel nach Figur 1 beschrieben ist. An den freien, das heißt den Rahmenstücken 131, 132 entgegengesetzten Enden der Griffschenkel 121, 122 ist jeweils eine Griffhülse 151, 152 aufgesetzt, welche bevorzugt aus einem elektrisch nicht isolierenden Material, bevorzugt Gummi, hergestellt ist. Der zweite Griffschenkel 122 des zweiten Zangenarms 102 weist hier eine entsprechende Ausnehmung zur Durchführung des Stromkabels 160 auf.

Die Rahmenstücke 131, 132 sind jeweils als ein im Wesentlichen parallelogrammförmiger Hohlkörper ausgeführt, mit einander parallel gegenüberliegende Längsseiten und mit in Bezug auf die Längsseiten verkürzten, einander parallel liegenden Stirnseiten. An den Stirnseiten der Rahmenstücke 131, 132 sind jeweils die Elektrodenschenkel 111, 112 und Griffschenkel 121, 122 angeschweißt und dabei im Wesentlichen parallel zu den Stirnseiten orientiert. Im Querschnitt sind die Rahmenstücke 131, 132 vierkantig ausgeführt.

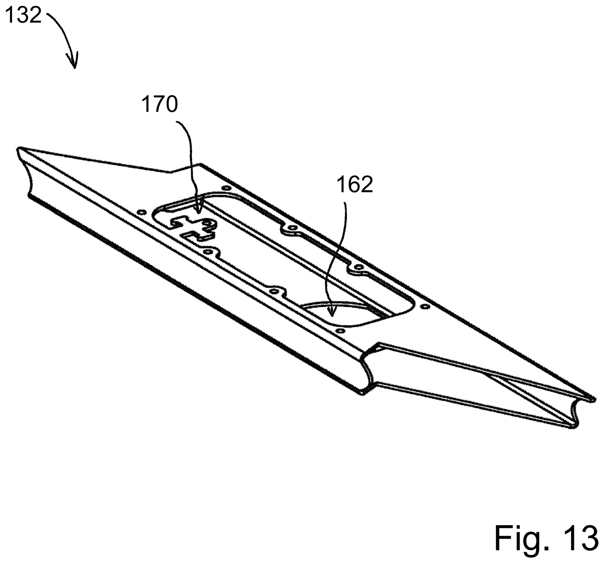

Eine perspektivische Einzelansicht auf das zweite Rahmenstück 132 des zweiten Zangenarms 102 ist in der Figur 13 angegeben. Das zweite Rahmenstück 132 weist hier eine Montageöffnung 170 auf, die mittels einer figürlich nicht dargestellten Deckplatte verschließbar ist. Die Deckplatte wird bevorzugt mittels einer Mehrzahl an Schrauben mit dem zweiten Rahmenstück 132 verschraubt, welches hierfür entsprechende Gewindedurchgangsbohrungen vorsieht.

Die Erfindung ist nicht auf die figürlich dargestellten Ausführungsbeispiele der Elektrodenkopfanordnung 1 und der Betäubungszange 100 beschränkt.

Selbstverständlich kann die Betäubungszange 100 anstelle der Elektrodenkopfanordnungen 141, 142 gemäß dem Ausführungsbeispiel nach Fig. 1 auch Elektrodenkopfanordnungen 141, 142 gemäß dem Ausführungsbeispiel nach Fig. 4 aufweisen.

Gemäß einem alternativen Ausführungsbeispiel kann eine erfindungsgemäße Betäubungszange 100 eine abweichende Rahmenkonstruktion, das heißt alternative Ausführungsformen für die Zangenarme 101, 102 vorsehen. Beispielsweise können die Zangenarme 101, 102 im Wesentlichen einteilig als S-förmig gebogene Rohre ausgeführt sein.

Gemäß einem alternativen Ausführungsbeispiel weist die Betäubungszange 100 die figürlich dargestellte Rahmenkonstruktion mit den im Wesentlichen dreiteilig ausgeführten Zangenarmen 101, 102 mit den jeweils als gerade Rohre beziehungsweise Rohrstücke ausgeführten Elektrodenschenkeln 111, 112 und Griffschenkeln 121, 122 und den diese verbindenden Rahmenstücken 131, 132 auf, wobei an den freien Enden der Elektrodenschenkel 111, 112 auch nicht erfindungsgemäße Elektrodenkopfanordnungen 141, 142 vorgesehen sein können, beispielsweise mit einer anders geformten, beispielsweise rechteckigen, quadratischen oder abweichend-polygonförmigen Elektrode 3. Ebenfalls kann dabei die Befestigungsweise der Elektrode 3 an dem Elektrodenkopf 2 alternativ realisiert sein.

### Bezugszeichenliste

- 1: Elektrodenkopfanordnung
- 2: Elektrodenkopf
- 3: Elektrode
- 4: Mutter
- 5: Spannscheibe
- 6: Elektrodenwandung
- 7: Ausklinkung
- 8: Radialvorsprung
- 9: Elektrodenöffnung
- 10: Verzahnung
- 11: Vorsprung
- 12: Vertiefung
- 13: Zentralöffnung
- 14: Gewindestift
- 15: Spitze
- 16: Dichtring
- 17: Metalldichtring
- 18: Kopfvertiefung
- 19: Axialvorsprung
- 20: Stufenvorsprung
- 21: Elektrodenschenkel
- 22: Dichtring
- 23: Gewindestift
- 24: Kabelschuh
- 25: erste Stirnseite
- 26: zweite Stirnseite
- 100: Betäubungszange
- 101: erster Zangenarm
- 102: zweiter Zangenarm
- 103: Drehgelenk
- 111: erster Elektrodenschenkel
- 112: zweiter Elektrodenschenkel
- 121: erster Griffschenkel
- 122: zweiter Griffschenkel
- 131: erstes Rahmenstück
- 132: zweites Rahmenstück
- 141: erste Elektrodenkopfanordnung
- 142: zweite Elektrodenkopfanordnung
- 151: erste Griffhülse
- 152: zweite Griffhülse
- 160: Stromkabel
- 162: Gelenköffnung
- 170: Montageöffnung
- α: Keilwinkel

## Patentansprüche

1. Elektrode (3) für eine Betäubungszange (100) zum elektrischen Betäuben von Schlachtvieh, **dadurch gekennzeichnet, dass** die Elektrode (3) bodenlos ausgeführt ist mit einer um eine Elektrodenöffnung (9) umlaufenden hohlzylindrischen Elektrodenwandung (6) und mit einer an einer ersten Stirnseite (25) vorgesehenen Verzahnung (10) mit einer Mehrzahl von zackenförmigen Vorsprüngen (11).

2. Elektrode (3) nach Anspruch 1, **dadurch gekennzeichnet, dass** die Elektrode (3) aus einem Rohr und/oder Rohrstück und bevorzugt als ein Rohrlaserschneidbauteil hergestellt ist.

3. Elektrode (3) nach Anspruch 1 oder 2, **dadurch gekennzeichnet, dass** im Bereich der Elektrodenwandung (6) wenigstens zwei und bevorzugt insgesamt drei radial gleich verteilt angeordnete Ausklinkungen (7) und/oder Wandöffnungen umfasst sind.

4. Elektrodenkopfanordnung (1, 141, 142) für eine Betäubungszange (100) zum elektrischen Betäuben von Schlachtvieh, umfassend eine an einem Elektrodenkopf (2) der Betäubungszange (100) lösbar gehaltene bodenlos ausgeführte Elektrode (3) nach einem der Ansprüche 1 bis 3 mit einer um eine Elektrodenöffnung (9) umlaufenden hohlzylindrischen Elektrodenwandung (6) und mit einer an einer dem Elektrodenkopf (2) entgegengesetzten ersten Stirnseite (25) vorgesehenen Verzahnung (10) mit einer Mehrzahl von zackenförmigen Vorsprüngen (11).

5. Elektrodenkopfanordnung (1, 141, 142) nach Anspruch 4, **dadurch gekennzeichnet, dass** in die Elektrodenöffnung (9) der Elektrode (3) eine Spannscheibe (5) aufgenommen ist, wobei die Spannscheibe (5) eine achsenmittige Zentralöffnung (13) aufweist, durch die ein Gewindestift (14) des Elektrodenkopfs (2) hindurchgeführt ist und wobei die Spannscheibe (5) über eine auf den Gewindestift (14) aufgeschraubte Mutter (4) an dem Elektrodenkopf (2) axial festgehalten ist.

6. Elektrodenkopfanordnung (1, 141, 142) nach Anspruch 5, **dadurch gekennzeichnet, dass** die Spannscheibe (5) zu in der Elektrodenwandung (6) der Elektrode (3) vorgesehenen Ausklinkungen (7) formkorrespondierende Radialvorsprünge (8) aufweist, wobei die Radialvorsprünge (8) der Spannscheibe (5) radial in die Ausklinkungen (7) der Elektrode (3) eingreifen und im Bereich der Ausklinkungen (7) axial an der Elektrode (3) anliegen.

7. Elektrodenkopfanordnung (1, 141, 142) nach Anspruch 4 oder 5, **dadurch gekennzeichnet, dass** die Spannscheibe (5) axial federnd ausgeführt und axial vorgespannt ist derart, dass die Spannscheibe (5) die Elektrode (3) mit einer zum Elektrodenkopf (2) gerichteten axialen Federkraft einspannt.

8. Elektrodenkopfanordnung (1, 141, 142) nach einem der Ansprüche 5 bis 7, **dadurch gekennzeichnet, dass** die Spannscheibe (5) aus Federblechstahl und bevorzugt mittels Laserschneidens hergestellt ist.

9. Elektrodenkopfanordnung (1, 141, 142) nach einem der Ansprüche 5 bis 8, **dadurch gekennzeichnet, dass** die Spannscheibe (5) drei radial gleich verteilt angeordnete Radialvorsprünge (8) aufweist.

10. Betäubungszange (100) zum elektrischen Betäuben von Schlachtvieh umfassend zwei einander überkreuzend über ein Drehgelenk (103) gegenseitig verdrehbar verbundene Zangenarme (101, 102), wobei die Zangenarme (101, 102) auf einer einem Bediener zugewandten Griffseite jeweils einen Griffschenkel (121, 122) und auf einer der Griffseite entgegengesetzten Seite jeweils einen Elektrodenschenkel (21, 111, 112) aufweisen, **dadurch gekennzeichnet, dass** an den der Griffseite entgegengesetzten Enden der Elektrodenschenkel (21, 111, 112) jeweils eine Elektrodenkopfanordnung (1, 141, 142) mit einer Elektrode (3) nach einem der Ansprüche 1 bis 3 vorgesehen ist.

11. Betäubungszange (100) nach Anspruch 10, **dadurch gekennzeichnet, dass** die Elektrodenkopfanordnungen (1, 141, 142) nach einem der Ansprüche 4 bis 9 ausgeführt sind.

12. Betäubungszange (100) nach Anspruch 10 oder 11, **dadurch gekennzeichnet, dass** die Griffschenkel (121, 122) und die Elektrodenschenkel (21, 111, 112) jeweils als ein geradliniges Rohrstück hergestellt sind und dass jeweils der Griffschenkel (121, 122) und der Elektrodenschenkel (121, 122) eines Zangenarms (101, 102) über ein Rahmenstück (131, 132) miteinander verbunden sind, wobei die Rahmenstücke (131, 132) an einander zugewandten Innenseiten jeweils eine Gelenköffnung (162) aufweisen, in welcher das Drehgelenk (103) aufgenommen ist.

13. Betäubungszange (100) nach Anspruch 12, **dadurch gekennzeichnet, dass** die Rahmenstücke (131, 132) eine parallelogrammförmige Grundform aufweisen mit einander parallel gegenüberliegenden Längsseiten und mit einander parallel gegenüberliegenden und gegenüber den Längsseiten verkürzt ausgebildeten Stirnseiten.

14. Betäubungszange (100) nach Anspruch 13, **dadurch gekennzeichnet, dass** die Elektrodenschenkel (21, 111, 112) und die Griffschenkel (121, 122) jeweils an den Stirnseiten der Rahmenstücke (131, 132) festgelegt und bevorzugt parallel zu den Stirnseiten der Rahmenstücke (131, 132) orientiert sind.

15. Betäubungszange (100) nach einem der Ansprüche 12 bis 14, **dadurch gekennzeichnet, dass** die Rahmenstücke (131, 132) als Vierkantprofilkörper und bevorzugt als Vierkantprofilhohlkörper ausgeführt sind.
